**Europäisches Patentamt**

(19) **European Patent Office**

**Office européen des brevets**

(11) Numéro de publication: **0 088 682**
**B1**

(12) **FASCICULE DE BREVET EUROPEEN**

(45) Date de publication du fascicule du brevet:
**06.11.85**

(21) Numéro de dépôt: **83400432.7**

(22) Date de dépôt: **03.03.83**

(51) Int. Cl.⁴: **B 60 K 5/12,** F 16 F 9/10

(54) Amortisseurs hydrauliques à membrane.

(30) Priorité: **03.03.82 FR 8203546**

(43) Date de publication de la demande:
**14.09.83 Bulletin 83/37**

(45) Mention de la délivrance du brevet:
**06.11.85 Bulletin 85/45**

(84) Etats contractants désignés:
**BE DE GB IT NL SE**

(56) Documents cités:
**EP - A - 0 042 909**
**EP - A - 0 042 910**
**FR - A - 2 372 351**
**FR - A - 2 448 664**
**FR - A - 2 457 418**
**GB - A - 811 748**
**US - A - 2 387 066**

(73) Titulaire: **HUTCHINSON, 2 rue Balzac, F-75008 Paris (FR)**

(72) Inventeur: **Bernuchon, Marc, 29, Résidence Les Neaux,**
**F-95320 Saint Leu La Foret (FR)**
Inventeur: **Pompei, Michel, 6, Allée Louise Labé,**
**F-75019 Paris (FR)**
Inventeur: **Gregoire, Daniel, 14, rue Louis Armand,**
**F-28200 Chateaudun (FR)**

(74) Mandataire: **Behaghel, Pierre et al, CABINET**
**PLASSERAUD 84 rue d'Amsterdam, F-75009 Paris (FR)**

# Description

L'invention est relative aux dispositifs destinés à amortir les déplacements relatifs alternatifs entre deux éléments rigides et plus particulièrement à ceux, de ces dispositifs, dans lesquels l'amortissement fait intervenir le refoulement d'un liquide à travers un passage étranglé et pour lesquels les déplacements à amortir comprennent, d'une part, des oscillations de relativement grande amplitude (c'est-à-dire supérieure au mm) à fréquence relativement basse (c'est-à-dire inférieure à 20 Hz) et, d'autre part, des vibrations de relativement faible amplitude (c'est-à-dire inférieure à 0,5 mm) à fréquence relativement élevée (c'est-à-dire supérieure à 20 Hz). Un tel amortisseur, connu par le brevet EP-A N° 0042910, est défini en principe dans le préambule de la revendication 1.

A titre d'exemple non limitatif on indique que de tels amortisseurs peuvent être montés entre un châssis de véhicule et le moteur de ce véhicule, les oscillations relativement amples à amortir étant celles créées par les irrégularités et variations de déclivités du sol lors de la circulation du véhicule sur ce sol et les vibrations à amortir étant celles dues au fonctionnement du moteur.

L'invention concerne plus particulièrement, parmi les amortisseurs du genre en question, ceux qui sont constitués par un boîtier étanche interposé entre les deux éléments rigides, boîtier comportant deux pièces rigides solidarisables respectivement avec les deux éléments rigides, une cloison évidée par le passage étranglé, divisant en deux compartiments l'intérieur du boîtier, une masse liquide remplissant l'un des deux compartiments, appelé ci-après le premier compartiment et au moins la partie du second compartiment contiguë à la cloison, des moyens pour relier entre elles de façon étanche les deux pièces rigides tout en permettant leurs déplacements relatifs alternatifs avec modification correspondante du volume d'au moins le premier compartiment, une membrane déformable délimitant une partie de ce premier compartiment et des moyens pour limiter à une amplitude faible, c'est-à-dire inférieure à 0,5 mm, les déformations de cette membrane.

Avec un tel amortisseur, une vibration de fréquence élevée et de faible amplitude exercée sur les deux éléments rigides engendre des déplacements relatifs correspondants des deux pièces rigides, lesquels sont transmis à la membrane par le liquide remplissant le premier compartiment et se traduisant par une succession rapide de déformations alternatives de cette membrane perpendiculairement à elle-même, d'amplitude inférieure à leur valeur maximale possible : les dimensions de la membrane sont en effet telles que le liquide ne soit pas alors conduit à traverser le passage étranglé selon des sens opposés en synchronisme avec ladite vibration.

Au contraire, pour les oscillations d'amplitude plus élevée et de fréquence plus basse, l'amplitude des déformations correspondantes de la membrane atteint sa valeur maximale possible et le liquide est alors refoulé à travers le passage étranglé, ce qui assure l'amortissement hydraulique désiré de la manière classique.

L'invention se rapporte plus particulièrement encore au cas où la membrane est constituée par une feuille continue étanche et flexible dont le bord est monté de façon étanche sur un siège rigide porté par le boîtier, le passage étranglé étant évidé dans une portion, de ce boîtier, écartée de la membrane.

Elle concerne plus précisément la membrane elle-même et son mode de montage sur son siège, le but de cette invention étant surtout d'améliorer la longévité de ladite membrane et de simplifier son montage.

Selon l'invention ce but est atteint par un amortisseur du type tel que défini dans le préambule de la revendication 1 et essentiellement caractérisé en ce que la zone annulaire périphérique de l'une des deux faces de sa membrane est appliquée axialement et adhérée contre une portée rigide annulaire plane constituant le siège de cette membrane, et en ce que la zone annulaire périphérique de l'autre face de la membrane est revêtue par une rondelle rigide adhérée sur cette zone de manière flottante.

Dans des modes de réalisation préférés, on a recours en outre à l'une et/ou à l'autre des dispositions suivantes :

— la membrane est constituée en caoutchouc et est renforcée par une armature textile noyée dans son épaisseur,

— le siège annulaire plan de la membrane est prolongé vers l'axe de ce siège par une surface arrondie sans arête vive du genre semi-torique elle-même prolongée, dans un sens s'éloignant de l'axe, par une surface tronconique,

— la membrane comprend une nervure annulaire faisant saillie sur sa face orientée vers le siège, nervure propre à épouser jointivement au moins la surface arrondie selon l'alinéa précédent,

— la membrane comprend une nervure annulaire faisant saillie sur sa face portant la rondelle, nervure dont le flanc de plus grand diamètre longe jointivement le bord intérieur de cette rondelle,

— le bord intérieur de la rondelle est rabattu axialement dans le sens s'éloignant de la membrane,

— les rayons de courbure de la surface extérieure du bord relevé de la rondelle et de la surface arrondie prolongeant le siège sont identiques,

— la largeur radiale de la rondelle est au moins égale à 5 mm,

— l'épaisseur axiale de la rondelle est comprise entre 0,5 et 2 mm.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant au dessin ci-annexé d'une manière bien entendu non limitative.

La fig. 1, de ce dessin, montre en coupe axiale un amortisseur hydraulique à membrane établie selon l'invention.

La fig. 2 montre en demi-coupe axiale, à échelle agrandie, la membrane comprise par cet amortisseur conformément à l'invention ainsi que son siège et que sa rondelle.

L'amortisseur considéré est destiné à être interposé verticalement entre un support rigide tel qu'un châssis de véhicule et un organe supporté tel qu'un moteur à combustion interne.

Cet amortisseur comprend un boîtier étanche composé:

— d'un bac inférieur 1 prolongé horizontalement par deux pattes perforées 2 solidarisables avec le support,
— d'un chapeau rigide 3 solidarisable avec l'organe supporté, et
— d'un organe intermédiaire annulaire 4 en caoutchouc étanche adhéré respectivement sur les bords du bac 1 et du chapeau 3 et propre à résister élastiquement à la compression axiale.

Une cloison 5 divise l'intérieur du boîtier en deux compartiments, l'un inférieur A et l'autre supérieur B, tous deux remplis de liquide.

La base du bac 1 pourrait être constituée par un fond rigide formant une seule pièce avec le reste de ce bac si la construction était renversée par rapport à celle ici considérée, ledit bac contenant alors près de son fond formant voûte un coussin d'air, enfermé ou non dans un sac étanche, et le compartiment A délimité par ce bac constituant alors le second compartiment ci-dessus défini (le premier compartiment étant toujours déformable et plein de liquide).

Dans la réalisation illustrée, la base du bac est constituée par un disque 6 en caoutchouc relativement épais et légèrement bombé vers le haut, disque dans la zone centrale duquel est noyée une pastille métallique 7.

Ce disque est lui-même solidarisé avec la virole constituant la paroi latérale du bac 1 par sertissage de cette virole sur une bague métallique 23 partiellement noyée dans la zone périphérique du disque en question.

La cloison 5, quant à elle, est constituée:
— par un anneau rigide 8 emmanché dans la virole constitutive du bac 1, avec interpositions d'un manchon 9 en caoutchouc adhéré sur cette virole, et
— par une membrane 10 s'étendant en travers de l'ouverture centrale délimitée par l'anneau 8, lequel anneau forme siège pour ladite membrane.

L'anneau 8 en question est perforé par au moins un passage 11 de petite section calibrée, lequel peut s'étendre hélicoïdalement ou circulairement à l'intérieur de l'anneau sur un arc pouvant approcher ou même dépasser 360°, et qui permet de faire communiquer les deux compartiments A et B.

C'est essentiellement sur la membrane 10 et sur son mode de montage que porte la présente invention.

D'une façon connue en soi, cette membrane est élastiquement flexible, étanche et continue, c'est-à-dire non perforée.

A l'état détendu elle peut se présenter sous une forme générale plane ou légèrement bombée.

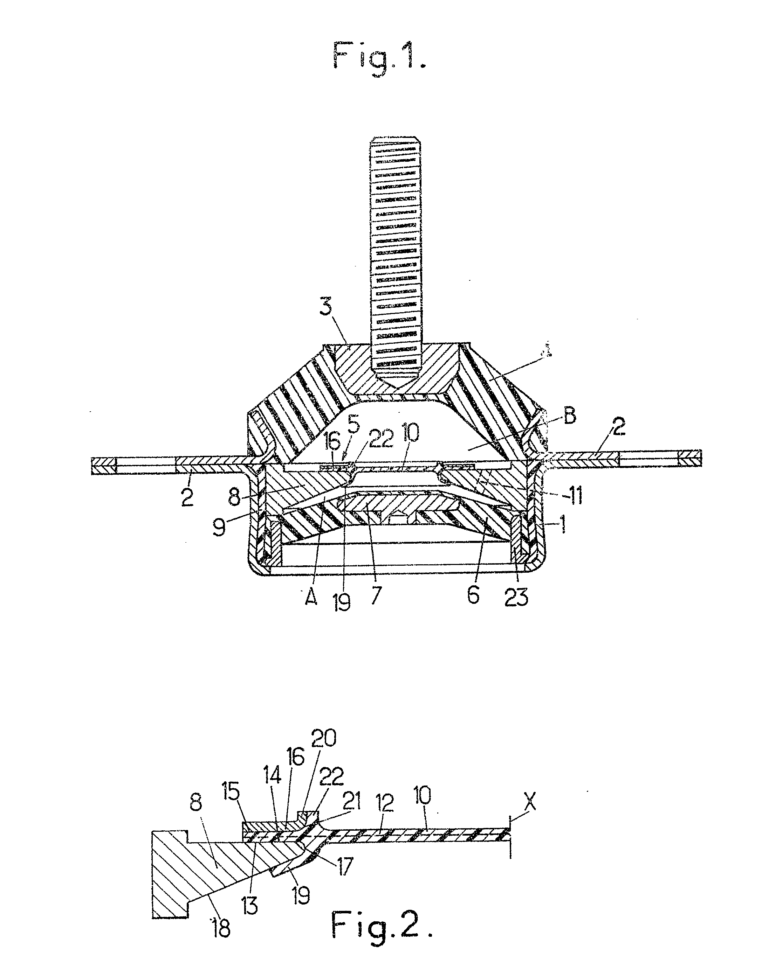

Elle est avantageusement constituée par un caoutchouc ou autre matériau élastique renforcé à l'aide d'une armature textile 12 (fig. 2) noyée dans son épaisseur.

La présence de cette armature présente l'avantage de rendre la membrane inextensible dès que son degré de déformation élastique atteint un seuil prédéterminé: il est donc inutile de prévoir des grilles ou écrans perforés en vue de limiter ses déformations, comme dans nombre de réalisations connues.

Le montage de la membrane est effectué en appliquant axialement la zone annulaire périphérique 13 de l'une de ses faces (savoir sa face inférieure sur les dessins) contre une portée annulaire plane en regard 14 délimitant le bord intérieur de l'anneau 8 et en faisant adhérer de toute manière désirable les deux surfaces annulaires ainsi juxtaposées, notamment par vulcanisation ou réticulation de la membrane et/ou par collage à l'aide d'une couche de colle intermédiaire.

En outre — et c'est là l'une des principales dispositions de la présente invention — on rapporte et on fait adhérer contre la zone annulaire périphérique 15 de la face de la membrane, opposée à celle qui vient d'être considérée, une rondelle rigide 16.

Dans le montage terminé (fig. 1), la face extérieure libre de cette rondelle n'est appliquée contre aucune pièce solide, étant donc directement en contact avec le liquide amortisseur contenu dans le compartiment B.

La demanderesse a constaté que, d'une façon surprenante, la présence de cette rondelle flottante sur le pourtour de la membrane augmentait d'une façon déterminante la longévité de cette membrane et supprimait les bruits de claquement dus à ses déformations alternatives.

La portée annulaire 13 de l'anneau 8 est prolongée en direction de l'axe X de l'anneau par une portée arrondie 17 présentant la forme d'un demi-tore tronqué à sa bse, ladite portée 17 étant elle-même prolongée, en s'éloignant de l'axe X, par une portée tronconique 18.

La membrane 10 présente elle-même sur sa face tournée vers le siège une nervure annulaire 19 propre à épouser jointivement la portée 17 et même avantageusement une portion de la portée 18, comme bien visible sur la fig. 2.

La rondelle 16 comporte avantageusement un bord interne 20 rabattu axialement dans le sens s'écartant du siège, la surface extérieure 21 de la zone de raccordement entre ce bord rabattu et la rondelle présentant, de préférence, les mêmes rayons de courbure que la portée 17 ci-dessus.

Par ailleurs, la membrane 10 présente sur sa face tournée vers la rondelle une seconde nervure annulaire 22 propre à épouser jointivement le bord interne de la rondelle 16, c'est-à-dire la surface 21 ci-dessus ainsi que la surface interne du bord rabattu 20, si un tel bord rabattu est prévu.

La longévité de la membrane équipée de ces deux nervures 19 et 22 est remarquable.

De plus, l'éventuelle égalité entre les rayons de courbure des surfaces 17 et 21 permet de rendre les déformations et usures de cette membrane identiques pour les deux sens de ses débattements.

On peut noter, par ailleurs, que le degré de rigidité de la membrane, et donc l'amplitude de ses débattements, peuvent être très simplement réglés en modifiant l'épaisseur radiale des nervures 19 et 22, toutes choses égales par ailleurs.

L'adhérence entre chaque nervure et les parties rigides qu'elle longe jointivement est avantageusement assurée de la même façon que l'adhérence entre la plage annulaire 13 de la membrane et la portée plane 14 de l'anneau 8.

En particulier, cette adhérence peut être assurée à chaud lors de la fabrication même de la membrane par vulcanisation dans un moule, l'ensemble du siège 8, de la membrane 10 montée sur ce siège et de la rondelle 16 rapportée sur cette membrane pouvant ainsi être préfabriqué avant mise en place de l'anneau 8 constitutif du siège dans la virole 1.

A titre de pure information on indique que, dans un mode de réalisation ayant donné toute satisfaction, pour lequel la charge de l'organe supporté lié au chapeau 3 était de l'ordre de 80 kg, l'épaisseur de la membrane était de l'ordre de 3 mm, les diamètres des ouvertures circulaires délimitées par le siège 8 et par la rondelle 16 étaient égaux et tous deux de l'ordre de 30 mm, la largeur radiale de la rondelle 16 était de l'ordre de 8 mm et son épaisseur axiale était de l'ordre de 1 mm.

D'une façon plus générale, l'épaisseur de la membrane est de préférence supérieure à 2 mm et la largeur radiale de la rondelle, supérieure à 5 mm.

L'armature textile est avantageusement constituée par un tissu de verre ou de polyester ou encore par une gaze en la superpolyamide connue sous le nom de Nylon.

Quant à la rondelle 16, elle est constituée en tout matériau rigide désirable compatible avec le liquide amortisseur, tel qu'un métal ou qu'une matière plastique.

Le fonctionnement de l'amortisseur hydraulique à membrane décrit ci-dessus est celui qui a été indiqué précédemment: tant qu'il s'agit d'amortir les vibrations, de l'organe supporté, présentant une fréquence relativement élevée et une petite amplitude (savoir de l'ordre du dixième de millimètre), les déplacements correspondants de la masse liquide contenue dans l'amortisseur sont totalement compensés par les déformations de la membrane 10 sans que l'étranglement de ce liquide dans le passage 11 puisse jouer un rôle quelconque.

Au contraire, lorsqu'un déplacement relatif entre le support et l'organe supporté est relativement lent et dépasse l'amplitude correspondant à la course maximale de la membrane 10, le liquide de l'un des compartiments A et B est refoulé dans l'autre à travers le passage 11, lequel assure alors un amortissement hydraulique au sens classique.

Ensuite de quoi, et quel que soit le mode de réalisation adopté, on dispose finalement d'un amortisseur hydraulique à membrane dont la constitution, le fonctionnement et les avantages (en particulier la longévité de la membrane et la simplicité de son montage) résultent suffisamment de ce qui précède.

## Revendications

1. Dispositif pour amortir les déplacements relatifs entre deux éléments rigides, constitué par un boîtier étanche interposé entre les deux éléments rigides, boîtier comportant deux pièces rigides (1, 3) solidarisables respectivement avec les deux éléments rigides, une cloison (5), évidée par un passage étranglé (11), divisant en deux compartiments l'intérieur du boîtier, une masse liquide remplissant l'un des deux compartiments, appelé ci-après le premier compartiment et au moins la partie du second compartiment contiguë à la cloison, des moyens (4) pour relier entre elles de façon étanche les deux pièces rigides tout en permettant leurs déplacements relatifs alternatifs avec modification correspondante du volume d'au moins le premier compartiment, une membrane (10) déformable délimitant une partie du premier compartiment et des moyens pour limiter à une amplitude faible, c'est-à-dire inférieure à 0,5 mm, les déformations de cette membrane, ladite membrane étant constituée par une feuille continue étanche et flexible dont le bord est monté de façon étanche sur un siège rigide faisant partie du boîtier et le passage étranglé étant évidé dans une zone rigide du boîtier écartée de la membrane, caractérisé en ce que la zone annulaire périphérique (13) de l'une des deux faces de la membrane (10) est appliquée axialement et adhérée contre une portée rigide annulaire plane (14) constituant le siège de cette membrane, et en ce que la zone annulaire périphérique (15) de l'autre face de la membrane est revêtue par une rondelle rigide (16) adhérée sur cette zone de manière flottante.

2. Amortisseur selon la revendication 1, caractérisé en ce que le siège annulaire plan (14) de la membrane (10) est prolongé vers l'axe (X) de ce siège par une surface arrondie sans arête vive du genre semi-torique (17) elle-même prolongée, dans un sens s'éloignant de l'axe, par une surface tronconique (18).

3. Amortisseur selon la revendication 2, caractérisé en ce que la membrane (10) comprend une nervure annulaire (19) faisant saillie sur sa face orientée vers le siège, nervure propre à épouser jointivement au moins la surface arrondie (17).

4. Amortisseur selon l'une des revendications précédentes, caractérisé en ce que la membrane (10) comprend une nervure annulaire (22) faisant saillie sur sa face portant la rondelle (16), nervure dont le flanc de plus grand diamètre longe jointivement le bord intérieur de cette rondelle.

5. Amortisseur selon l'une des revendications précédentes, caractérisé en ce que le bord intérieur de la rondelle (16) est rabattu axialement (en 20) dans le sens s'éloignant de la membrane.

6. Amortisseur selon les revendications 2 et 5, caractérisé en ce que les rayons de courbure de la surface extérieure du bord relevé (20) de la rondelle et de la surface arrondie (17) prolongeant le siège sont identiques.

7. Amortisseur selon l'une des revendications précédentes, caractérisé en ce que la largeur radiale de la rondelle (16) est au moins égale à 5 mm.

8. Amortisseur selon l'une des revendications précédentes, caractérisé en ce que l'épaisseur axiale de la rondelle (16) est comprise entre 0,5 et 2 mm.

9. Amortisseur selon l'une des revendications précédentes, caractérisé en ce que la membrane (10) est constituée en caoutchouc et est renforcée par une armature textile (12) noyée dans son épaisseur.

## Claims

1. A device for damping the relative movements between two rigid elements, formed by a sealed case interposed between the two rigid elements, which case comprises two rigid pieces (1, 3) interlockable respectively with the two rigid elements, a dividing wall (5) in which is formed a restricted passage (11), dividing the inside of the case into two compartments, a liquid mass filling one of the two compartments, called hereafter the first compartment and at least the part of the second adjacent the dividing wall, means (4) for connecting sealingly together the two rigid pieces while allowing relative reciprocating movements thereof with corresponding modification of the volume of at least the first compartment, a deformable membrane (10) delimiting a part of the first compartment and means for limiting to a low amplitude, that is to say less than 0.5 mm, the deformations of this membrane, said membrane being formed by a continuous impervious and flexible foil whose edge is sealingly mounted on a rigid seat forming part of the case and the restricted passage being formed in a rigid zone of the case spaced from the membrane, characterized in that the peripheral annular zone (13) of one of the two faces of the membrane (10) is applied axially and bonded against a flat annular rigid bearing surface (14) forming the seat of this membrane, and in that the annular peripheral zone (15) of the other face of the membrane is covered by a rigid washer (16) bonded floatingly to this zone.

2. The shock absorber according to Claim 1, characterized in that the annular flat seat (14) of the membrane (10) is extended towards the axis (X) of this seat by a rounded surface with no sharp edge of the semi-toric type (17) itself extended, in a direction away from the axis, by a truncated cone shaped surface (18).

3. The shock absorber according to Claim 2, characterized in that the membrane (10) comprises an annular rib (19) projecting from its face orientated towards the seat, which rib is adapted to mate jointingly with at least the rounded surface (17).

4. The shock absorber according to anyone of the preceding claims, characterized in that the membrane (10) comprises an annular rib (22) projecting from its face carrying the washer (16), the side of this rib having the largest diameter running jointingly along the inner edge of this washer.

5. The shock absorber according to anyone of the preceding claims, characterized in that the inner edge of the washer (16) is bent back axially (at 20) in the direction away from the membrane.

6. The shock absorber according to Claims 2 and 5, characterized in that the radii of curvature of the outer surface of the raised edge (20) of the washer and of the rounded surface (17) extending the seat are identical.

7. The shock absorber according to anyone of the preceding claims, characterized in that the radial width of the washer (16) is at least equal to 5 mm.

8. The shock absorber according to anyone of the preceding claims, characterized in that the axial thickness of the washer (16) is between 0.5 and 2 mm.

9. The shock absorber according to anyone of the preceding claims, characterized in that the membrane (10) is made from rubber and is reinforced by a textile framework (12) embedded in its thickness.

## Patentansprüche

1. Hydraulischer Membrandämpfer zum Dämpfen der Relativverschiebungen zwischen zwei starren Elementen, bestehend aus einem dichten Gehäuse, das zwischen den beiden starren Elementen angeordnet ist und zwei starre Teile (1, 3) enthält, die an jeweils einem der beiden starren Elemente befestigt werden können, einer Trennwand (5), die mit einer engen Bohrung (11) versehen ist und den Innenraum des Gehäuses in zwei Räume unterteilt, einer flüssigen Masse, die einen der beiden Räume, der nachstehend als erster Raum bezeichnet ist und wenigstens den Teil des zweiten Raumes ausfüllt, der an die Trennwand angrenzt, Einrichtungen (4), die die beiden starren Teile dicht miteinander verbinden und gleichzeitig ihre hin- und hergehende Relativverschiebung bei entsprechender Änderung des Volumens wenigstens des ersten Raumes ermöglichen, einer deformierbaren Membran (10), die einen Teil des ersten Raumes begrenzt und Einrichtungen, mit denen die Deformationen dieser Membran mit einer geringen, unterhalb 0,5 mm liegenden Amplitude begrenzt werden, wobei die Membran aus einer durchgehenden dichten und flexiblen Folie besteht, deren Rand dicht an einem starren Sitz befestigt ist, der Teil des Gehäuses ist und die enge Bohrung in einer starren Zone des Gehäuses im Abstand von der Membran angebracht ist, dadurch gekennzeichnet, dass die ringförmige Umfangszone (13) einer der beiden Oberflächen der Membran (10) axial an einer starren, ringförmigen ebenen Auflagefläche (14), die den Sitz dieser Membran bildet, anliegt und daran befestigt ist und dass auf die ringförmige Umfangszone (15) der anderen Oberfläche der Membran ein starrer Ring (16) aufgelegt und nach Art einer schwimmenden Befestigung mit der Umfangszone verklebt ist.

2. Hydraulischer Membrandämpfer nach Anspruch 1, dadurch gekennzeichnet, dass die ringförmige ebene Auflagefläche (14) für die Membran (10) in Richtung der Achse (X) durch eine abgerundete Oberfläche (17) in Richtung ohne scharfe Kante halbkreisartig verlängert ist und dass sich der verlängerte Abschnitt in einer sich von der Achse entfernenden Richtung unter Bildung einer kegelstumpfartigen Oberfläche erstreckt.

3. Hydraulischer Membrandämpfer nach Anspruch 2, dadurch gekennzeichnet, dass die Membran (10) mit einer ringförmigen Rippe (19) versehen ist, die an der dem Sitz gegenüberliegenden Fläche vorspringt und die dicht wenigstens an der abgerundeten Oberfläche (17) zur Anlage kommt.

4. Hydraulischer Membrandämpfer nach einem der vorhergehenden Ansprüche, dadurch gekennzeichnet, dass die Membran (10) eine ringförmige Rippe (22) enthält, die an der den Ring (16) haltenden Fläche vorspringt und deren Seitenfläche mit dem grösseren Durchmesser sich dicht längs des inneren Randes des Ringes erstreckt.

5. Hydraulischer Membrandämpfer nach einem der Ansprüche 1 bis 4, dadurch gekennzeichnet, dass der innere Rand des Ringes (16) in axialer Richtung (bei 20) von der Membran weg abgebogen ist.

6. Hydraulischer Membrandämpfer nach den Ansprüchen 2 bis 5, dadurch gekennzeichnet, dass der Radius des kurvenförmigen Verlaufes der äusseren Oberfläche des abgebogenen Randes (20) des Ringes und der der abgerundeten Oberfläche (17), die die Auflagefläche verlängert, identisch sind.

7. Hydraulischer Membrandämpfer nach einem der vorhergehenden Ansprüche, dadurch gekennzeichnet, dass die radiale Breite des Ringes (16) wenigstens 5 mm beträgt.

8. Hydraulischer Membrandämpfer nach einem der Ansprüche 1 bis 7, dadurch gekennzeichnet, dass die axiale Stärke des Ringes (16) zwischen 0,5 und 2 mm liegt.

9. Hydraulischer Membrandämpfer nach einem der vorhergehenden Ansprüche, dadurch gekennzeichnet, dass die Membran (10) aus Kautschuk besteht und mittels einer textilen Einlage (12) verstärkt ist, die in die Kautschukmasse eingebettet ist.

# Fig.1.

# Fig.2.